(19) Europäisches Patentamt
European Patent Office
Office européen des brevets

(11) EP 0 167 398 B2

(12) NEW EUROPEAN PATENT SPECIFICATION

(45) Date of publication and mention of the opposition decision:
**28.02.2001 Bulletin 2001/09**

(45) Mention of the grant of the patent:
**11.03.1992 Bulletin 1992/11**

(21) Application number: **85304770.2**

(22) Date of filing: **04.07.1985**

(51) Int Cl.[7]: **G09G 3/36**, G02F 1/137

# (54) Ferro-electric liquid crystal electro-optical device

Elektrooptische Einrichtung mit ferroelektrischen Flüssigkristallen

Dispositif électro-optique à cristaux liquides ferro-électriques

(84) Designated Contracting States:
**DE FR GB**

(30) Priority: **05.07.1984 JP 13928584**

(43) Date of publication of application:
**08.01.1986 Bulletin 1986/02**

(73) Proprietor: **SEIKO INSTRUMENTS INC.**
**Tokyo 136 (JP)**

(72) Inventors:
- **Harada, Takamasa**
  **6-31-1, Kameido Koto-ku Tokyo (JP)**
- **Taguchi, Masaaki**
  **6-31-1, Kameido Koto-ku Tokyo (JP)**

(74) Representative: **Sturt, Clifford Mark et al**
**Miller Sturt Kenyon**
**9 John Street**
**London WC1N 2ES (GB)**

(56) References cited:
**EP-A- 0 092 181**
**FR-A- 2 544 884**
**GB-A- 2 069 739**
**US-A- 3 995 942**
**US-A- 4 367 924**

- **Applied Physics Letters, Vol. 36, No. 11, 1 June 1980, pp.889-901, Clark & Lagerwall:"Submicrosecond Bistable Electro-Optical Switching in Liquid Crystals"**

EP 0 167 398 B2

## Description

This invention relates to a ferro-electric liquid crystal electro-optical display devices.

Liquid crystal display panels have many advantages such as being small and thin and having low power consumption. Therefore they are widely used in watches, calculators, etc.

Liquid crystal compounds used in display panels are thermo-tropic and have different liquid crystal phases in various temperature ranges. Liquid crystal phases are classified into two basic categories, the nematic phase which does not have a layered structure, and the smectic phase which does have layered structure.

The smectic phase is sub-classified into a one-axis smectic A phase (hereinafter referred to as "the SmA phase") and a two axis smectic C phase (hereinafter referred to as "the SmC phase"). In these phases, the thickness of the layers are approximately equal to the length of the liquid crystal molecule. Figure 2 is a typical diagram of the molecular orientation of the nematic phase (a), the SmA phase (b) and the SmC phase (c).

If the liquid crystal molecules of a liquid crystal compound have an asymmetric carbon atom and do not have a racemic body, the liquid crystal compound takes a spiral structure. In the case of the nematic phase, the long axis of the liquid crystal molecules is in the plane of the layers, and they are orientated in one direction. This is the chiral nematic phase in which the direction of orientation of the long axis of the liquid crystal molecules in one layer is twisted relative to the direction of orientation of the long axis of the liquid crystal molecules in the adjacent layer. Figure 3 shows typical molecular orientation in the chiral smectic phase. In this case, the molecules are spirally orientated having a normal to the layers as a spiral axis. This is the chiral smectic C phase (hereinafter referred to as the "SmC* phase").

Figure 4(a) shows typical molecular orientation of the SmC* phase. The direction of the long axis of the liquid crystal molecules (hereinafter referred to as the "molecular axis") in one layer is inclined at an angle θ° to the normal to the layer, and this angle is the same in each layer. Figure 4(b) shows the relation between the molecular axis and the normal to the layer.

When considering the molecular orientation of the SmC* phase from the normal to the layers, the angle θ rotates in each layer by a fixed amount (Fig. 4(a) shows the case where the rotation is 45° in adjacent layers), and the molecular orientation forms a spiral structure. In general, the SmC* phase not only has a spiral construction, but has an electric dipole moment in a direction orthogonal to the molecular axis, and shows a ferro-electric characteristic.

A ferro-electric liquid crystal compound was synthesised in 1975 by Meyer et al (J.de. Phys. 36, 69, 1975). The liquid crystal compound synthesised at that time was the so-called DOBAMBC, (2-methyl butyl P-[(P-n-decycloxy-benzylidene)amino]):

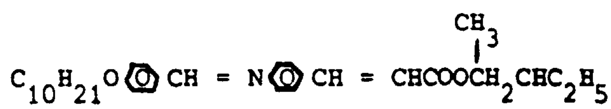

and is now widely used in the study of ferro-electric liquid crystal materials.

The SmC* phase has a spiral structure as stated above, and the pitch of the spiral differs in different liquid crystal compounds but is usually several microns.

When a liquid crystal compound which takes the SmC* phase is placed in a cell which has a gap which is about 1μm between plates (Figure 5) thinner than the pitch of the spiral, the spiral structure disappears.

The molecular orientation when the spiral structure disappears, is shown in Figure 5, together with the geometric relation with the plates 10 of the cell. The axis of the liquid crystal molecules is parallel to the plates 10. Therefore, the liquid crystal molecules are orientated so that the molecular axis is parallel to the plates, and inclined at 9° to the normal to the layer. The normal to the layer is parallel to the plates 10, and thus the layer is orthogonal to the plates. When it is inclined θ° to the normal to the layer, a domain which is inclined θ° is a clockwise direction from the normal, and a domain which is inclined θ° in the anticlockwise direction to the normal, exist together.

The liquid crystal molecules of the SmC* phase generally have an electric dipole moment which is orthogonal to the molecular axis. If the electric dipole moment is orientated upwardly against the plates 10 in one domain, the electric dipole moment is orientated downwardly in the other domain.

When an electric field is applied between the plates 10, the liquid crystal molecules of the whole cell are orientated in position +θ or position -θ to the normal to the layer (+ and - are determined by the direction of the electric dipole moment). Hereinafter, these positions will be referred to as the +θ and the -θ position.

When the electric field is applied opposite to the way stated above, the liquid crystal molecules move either from the +θ position to the -θ position or from the -θ position to the +θ position. As the liquid crystal molecules of the whole cell orientate in either the +θ position or the -θ position, this phase structure is the SmC phase. The SmC phase

was achieved by causing the disappearance of the spiral structure by making the gap between the plates 10 thinner than the length of the liquid crystal molecules.

However, as a remnant of the spiral structure when the liquid crystal molecules of the SmC phase move from ±θ position to the opposite position, they move along the cone as shown in Figure 4(b). Usually in the SmC phase such movement does not take place even when an electric field is applied.

After suitably selecting the polarity of the electric field, by moving the liquid crystal molecules between the +θ position and the -θ position, and attaching a polariser to each of the plates 10, a display cell which can be used as a display element is achieved. Figure 6 shows the relation between the two polarisers and the ±θ positions of liquid crystal molecules, when using the cell as a display element.

Referring to Figure 6(a), the polarising axis of the polariser on the incidence side of the cell is matched to the +θ position. The polariser on the outgoing side has its polarising axis rotated through 90° and the axis of the polariser on the incidence side. As shown in Figure 6(a) when the liquid crystal molecules are in the +θ position, the light polarised by the polariser on the incidence side reaches the polariser on the outgoing side without changing its polarising direction, but as the polarisers are crossed at right angles, the light is blocked by the polariser on the outgoing side. This condition is the dark condition.

On the other hand, if the liquid crystal molecules move to the -θ position, the light is rotated by 90° by the liquid crystal molecules so that it passes through the polariser on the outgoing side due to the birefringence of the liquid crystal molecules. If θ is 22.5° and the thickness of the cell is appropriately selected most of the light passes through the polariser on the outgoing side. This is the bright condition.

To achieve ideal display conditions, relations between cell thickness and anisotropy Δn of the refractive index of the liquid crystal material is:

$$d = (2-1)\alpha/\Delta n$$

where

α = Cπ/ω, C = light speed
ω = angular frequency of light
n = refractive index.

Figure 6(b) shows the case where the polarising axes of the polarisers on both incidence and outgoing sides of the cell is the same. In this case, the +θ position corresponds to the bright condition and the -θ position corresponds to the dark condition. The relation between the cell thickness and Δn is as given above. An ideal bright-dark condition is atttained when θ = 22.5°.

This view of a display element was first announced by Clark and Lagerwall (Appl. Phys. Lett. 36, 899, 1980), who indicated that a display element with a thinner cell, with two attached polarisers, has the following characteristics:

(1) High speed response of the order of micro-seconds;
(2) Memorising characteristic;
(3) Desirable threshold value characteristic.

The memorising characteristic, i.e. the characteristic which maintains the condition even when the electric field is removed, and the high speed response characteristic when an electric field is applied are confirmed but according to our experiments, however, the desirable threshold value characteristic is not confirmed.

Document EP 0 092 181A3 discloses a method for driving a ferro-electric liquid crystal device. A pluse for defining the light transmitting state of the device is applied. Before and/or after application of this pulse a voltage signal is applied which renders the average value of the voltages applied equal to zero.

Accordingly to the present invention there is provided a liquid crystal electro-optical display device driven in a time sharing mode, having a panel with a liquid crystal material disposed between scanning electrodes and display electrodes, a drive circuit arranged for scanning the scanning electrodes for driving the panel, and a control circuit for controlling the drive circuit, characterised in that the liquid crystal material is a ferro-electric liquid crystal material and in that the control circuit and the drive circuit are arranged to co-operate so that the panel can be driven by scanning only those scanning electrodes associated with portions of a display to be changed, with the waveform applied between those scanning electrodes which are scanned and the display electrodes comprising a relatively high pulse to change the the display state followed by relatively low a.c. pulses to maintain the display state.

The ferro-electric liquid crystal material may be a chiral smectic ferro-electric liquid crystal.

Preferably the drive circuit is controlled by the control circuit through a start-finish scanning address designation circuit.

The invention illustrated, merely by way of example, in the accompanying drawings, in which:-

Figure 1 is a block diagram of a liquid crystal display device according to the present invention;
Figure 2 is a typical illustration of the nematic, smectic A and smectic C phases of a liquid crystal compound;
Figure 3 is a typical illustration of the chiral nematic phase of a liquid crystal compound;
Figure 4 is a typical illustration of the chiral smectic C phase of a liquid crystal compound;
Figure 5 shows molecular configuration when a gap of a display cell is from 3 to 1 μm;
Figure 6 shows the relation between the direction of polarisation of a polariser and the molecular axis, when the chiral smectic C phase is used in a display cell;
Figure 7 are embodiments of drive waveforms when the chiral smectic C phase is used in a display cell;
Figure 8 shows the basic drive signals $\theta y$, $\bar{\theta} y$, $\theta x$, $\bar{\theta} x$, which make up the waveforms shown in Figure 7;
Figure 9 is an embodiment of drive waveforms for driving a fixed display of a liquid crystal display device;
Figure 10 is an embodiment of drive waveforms applied to a picture element, at the time of partial scanning of a liquid crystal display device according to the present invention; and
Figure 11 is an embodiment of a scanning signal fed to a scanning electrode drive circuit of a liquid crystal display device according to the present invention at the time of partial scanning.

A method of driving a ferro-electric liquid crystal electro-optical device has been suggested where bright and dark conditions are achieved by applying the drive waveforms as shown in Figure 7 to a liquid crystal material. In this drive method, the liquid crystal molecules are moved to the $+\theta$ or $-\theta$ positions referred to above, when selecting a scanning electrode by a relatively high positive and negative voltage pulse, and then maintaining the display condition (the position of molecules) by low voltage Ac pulses. This drive method uses the characteristics of the ferro-electric liquid crystal material.

Figure 8 shows four signals, $\theta y$, $\bar{\theta} y$, $\theta x$ $\bar{\theta} x$, which are basic drive signals for the above drive method. Signals $\theta y$, $\bar{\theta} y$, $\theta x$, $\bar{\theta} x$, are respectively:

$\theta y$ = selecting scanning electrode signal;
$\bar{\theta} y$ = non-selecting scanning electrode signal;
$\theta x$ = selecting display electrode signal;
$\bar{\theta} x$ = non-selecting display electrode signal.

These signals are selected by a scanning signal and display data, and are applied to a scanning electrode and a display electrode.

When the response time of ferro-electric liquid crystal material is almost the same as the time length of the pulse rows of the drive waveforms of Figure 7, the contrast between brightness and darkness is most distinct. Usually the time length is established to be almost the same length as the response time.

Currently, the response time of MBRA whose structure is:

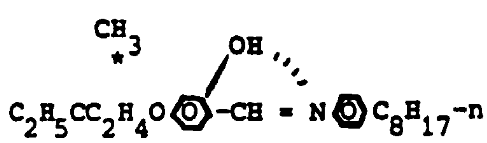

used at temperatures close to room temperature, is $\tau$ = 500 μsec, when T 0 30°C. This response time is determined by uni-axial orientation of upper and lower plates of a display cell. Under these conditions writing time of a picture is about 0.8 seconds in the case where the picture comprises about 400 scanning lines. Therefore, it is impossible for the scanning not to be visible to the human eye, when the frame frequency is set to 30 Hz. Thus a drive method shown in Figure 9 is used for displays having only small variation, such as fixed displays. That is, the writing is done by the drive method shown in Figure 7 and a high-impedance condition is effected so as to use the memorising characteristic of the display cell. This technique has problems such as one has to re-write the whole of the picture so as to change one part of the picture. It takes about 0.8 seconds in the case of using MBRA during which the picture is difficult to see.

In the present invention, partial rewriting is performed, by scanning only the scanning electrodes of the portion of the picture to be changed when the other scanning electrodes are in a non-selecting position. Accordingly, it is possible to control the picture effectively by partial rewriting and to remove the difficulty in seeing the picture when the

picture is changed by not rewriting the whole picture.

When driven as above, the drive waveforms shown in Figure 10 are applied to liquid crystal material which is between the scanning electrodes and the display electrodes. The waveforms (b) and (c) of Figure 10 respectively, make the bright-dark conditions (the opposite conditions, dark-bright, is possible according to the arrangement of the polarisers). The drive waveform (a) in Figure 10 is applied to the liquid crystal material which is inbetween the electrodes not scanned and the display electrodes. This drive waveform is an AC pulse, and the display does not change.

Figure 1 is a block diagram of a liquid crystal display device according to the present invention. A control circuit 2 driven by an oscillator circuit 1 outputs a signal 7 which determines one scanning electrode among the scanning electrodes that starts and finishes the scan, to a start-finish scanning address designation circuit 3. The circuit 3 outputs a partial scanning signal to the scanning electrode drive circuit 4 which drives a ferro-electric liquid crystal display panel 6. The panel 6 is also driven by a display electrode drive circuit 5 which receives signals from the control circuit 2. The panel consists of a ferro-electric liquid crystal material disposed between scanning electrodes and display electrodes (not shown).

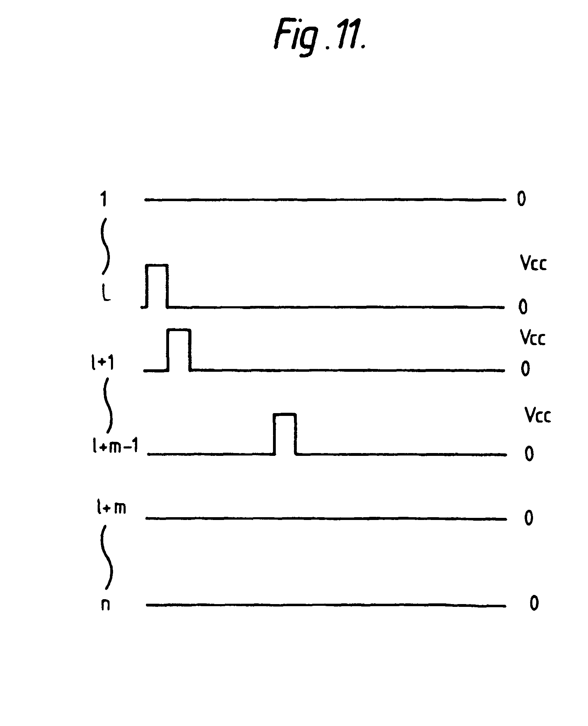

The scanning signal outputted to each of the scanning electrodes in this condition is shown in Figure 11. The scanning electrodes are numbered 1 to n, and among them scanning electrodes l to l + m-1 are scanned. The other scanning electrodes are not scanned, and the signal outputted to the scanning electrode drive circuit becomes low level.

In the scanning electrode drive circuit 4, when the scanning signal is high level, signal By shown in Figure 8 is selected and applied to m lines l to l + m-1 scanning electrodes. When at low level, the signal By shown in Figure 8 is selected and applied to the scanning electrodes. To the other scanning electrodes which are not partially scanned signal θy is selected and applied. The display data must show the display conditions of the picture element on the partially scanned scanning electrodes l to l + m-1. Therefore, the display data is outputted in order beginning with the display data on the scanning electrode l matched to the scanning.

With a ferro-electric liquid crystal display panel, it is possible to rewrite partially without changing the other parts of the picture, by partially scanning the scanning electrodes corresponding to the part of the picture to be changed. Rewriting can be done, when no partial alternation change of the picture is sensed by the eye.

In computers that process information, only the changing data is transmitted to the control circuit 2 when the picture is to be changed. At other times, the computer can perform other processes. Thus the above described liquid crystal display device according to the present invention has a remarkable effect from the visual point of view, and in information processing.

## Claims

1. A liquid crystal electro-optical display device driven in a time sharing mode, having a panel (6) with a liquid crystal material disposed between scanning electrodes and display electrodes, a drive circuit (4) arranged for scanning the scanning electrodes for driving the panel, and a control circuit (2) for controlling the drive circuit, characterised in that the liquid crystal material is a ferro-electric liquid crystal material and in that the control circuit and the drive circuit are arranged to co-operate so that the panel can be driven by scanning only those scanning electrodes associated with portions of the display to be changed, with the waveform applied between those scanning electrodes which are scanned and the display electrodes comprising a relatively high pulse to change the the display state followed by relatively low a.c. pulses to maintain the display state.

2. An electro-optical device as claimed in claim 1 characterised in that the ferro-electric liquid crystal material is a chiral smectic ferro-electric liquid crystal material.

3. An electro-optical device as claimed in claim 1 or 2 characterised in that the drive circuit is controlled by the control circuit through a start-finish scanning address designation circuit (3).

4. A liquid crystal electro-optical display device driven in a time-sharing mode, having a panel (6) with a liquid crystal material disposed between scanning electrodes and display electrodes, a drive portion (4) for driving the panel, and a control portion (2) for controlling the drive portion, characterised in that the liquid crystal material is a ferro-electric liquid crystal material, and in that the panel can be driven by scanning only those scanning electrodes associated with portions of the display to be changed, with the waveform applied between those scanning electrodes which are scanned and the display electrodes comprising a relatively high pulse to change the the display state followed by relatively low a.c. pulses to maintain the display state.

## Patentansprüche

1. Im Teilnehmerbetrieb (time sharing mode) betriebene elektro-optische Vorrichtung des Flüssigkristall-Typs, umfassend eine Tafel (panel) (6) mit einem zwischen Abtast-Elektroden und Anzeige-Elektroden angeordneten Flüssigkristall-Material, einen Antriebsschaltkreis (4), der zum Abtasten der Abtast-Elektroden ausgebildet ist, um die Tafel anzutreiben, und einen Steuerschaltkreis (2) zum Steuern des Antriebsschaltkreises, **dadurch gekennzeichnet**, daß das Flüssigkristall-Material ein ferroelektrisches Flüssigkristall-Material ist und daß der Steuerschaltkreis und der Antriebsschaltkreis so angeordnet sind, daß sie zusammenarbeiten, so daß die Tafel angetrieben werden kann, indem nur jene Abtast-Elektroden abgetastet werden, die den zu verändernden Abschnitten der Anzeige zugeordnet sind, wobei die Signalform, die zwischen diesen Abtastelektroden, die abgetastet werden, und den Anzeigeelektroden angelegt wird, einen relativ hohen Impuls umfaßt, um den Anzeigezustand zu ändern, gefolgt von relativ niedrigen Wechselstromimpulsen, um den Anzeigezustand aufrechtzuerhalten.

2. Elektro-optische Vorrichtung nach Anspruch 1, **dadurch gekennzeichnet**, daß das ferroelektrische Flüssigkristall-Material ein chirales, smektisches ferro-elektrisches Flüssigkristall-Material ist.

3. Elektro-optische Vorrichtung nach Anspruch 1 oder 2, **dadurch gekennzeichnet**, daß der Antriebsschaltkreis von dem Steuerschaltkreis durch einen Schaltkreis (3) zur Bestimmung einer Beginn-End-Abtastadresse gesteuert wird.

4. Im Teilnehmerbetrieb (time sharing mode) betriebene elektro-optische Vorrichtung des Flüssigkristall-Typs umfassend eine Tafel (panel) (6) mit einem zwischen Abtast-Elektroden und Anzeige-Elektroden angeordneten Flüssigkristall-Material, einen Antriebsabschnitt (4) zum Antreiben der Tafel und einen Steuerabschnitt (2) zum Steuern des Antriebsabschnitts, **dadurch gekennzeichnet,** daß das Flüssigkristall-Material ein ferro-elektrisches Flüssigkristall-Material ist und daß die Tafel angetrieben werden kann, indem nur jene Abtast-Elektroden abgetastet werden, die den zu verändernden Abschnitten der Anzeige zugeordnet sind, wobei die Signalform, die zwischen denjenigen Abtastelektroden, die abgetastet werden, und den Anzeigeelektroden angelegt wird, einen relativ hohen Impuls umfaßt, um den Anzeigezustand zu ändern, gefolgt von relativ niedrigen Wechselstromimpulsen, um den Anzeigezustand beizubehalten.

## Revendications

1. Dispositif d'affichage électro-optique à cristaux liquides attaqué suivant un mode à partage de temps, comportant un panneau (6) ayant un matériau à cristaux liquides disposé entre des électrodes de balayage et des électrodes d'affichage, un circuit (4) d'attaque disposé de manière à balayer les électrodes de balayage pour attaquer le panneau, et un circuit (2) de commande destiné à commander le circuit d'attaque, caractérisé en ce que le matériau à cristaux liquides est un matériau à cristaux liquides ferroélectrique et en ce que le circuit de commande et le circuit d'attaque sont disposés de manière à coopérer de sorte que le panneau peut être attaqué en balayant uniquement les électrodes de balayage qui sont associées à des parties du dispositif d'affichage à modifier, la forme d'onde appliquée entre ces électrodes de balayage qui sont balayées et les électrodes d'affichage comportant une impulsion relativement élevée pour modifier l'état d'affichage suivi par des impulsions relativement faibles à courant alternatif pour maintenir l'état affiché.

2. Dispositif électro-optique suivant la revendication 1, caractérisé en ce que le matériau à cristaux liquides ferroélectrique est un matériau à cristaux liquides ferroélectrique chiral smectique.

3. Dispositif électro-optique suivant la revendication 1 ou 2, caractérisé en ce que le circuit d'attaque est commandé par le circuit de commande par l'intermédiaire d'un circuit (3) de désignation d'adresse de balayage de démarrage-fin.

4. Dispositif d'affichage électro-optique à cristaux liquide attaqué suivant un mode à partage de temps, comportant un panneau (6) ayant un matériau à cristaux liquides disposé entre des électrodes de balayage et des électrodes d'affichage, une partie (4) d'attaque destinée à attaquer le panneau, et une partie (2) de commande destinée à commander la partie d'attaque, caractérisé en ce que le matériau à cristaux liquides est un matériau à cristaux liquides ferroélectrique et en ce que le panneau peut être attaqué par le balayage uniquement des électrodes de balayage qui sont associées à des parties du dispositif d'affichage à modifier, la forme d'onde appliquée entre les électrodes de balayage qui sont balayées et les électrodes d'affichage comportant une impulsion relativement

élevée pour modifier l'état d'affichage suivi par des impulsions à courant alternatif relativement faibles pour maintenir l'état d'affichage.

Fig. 1.

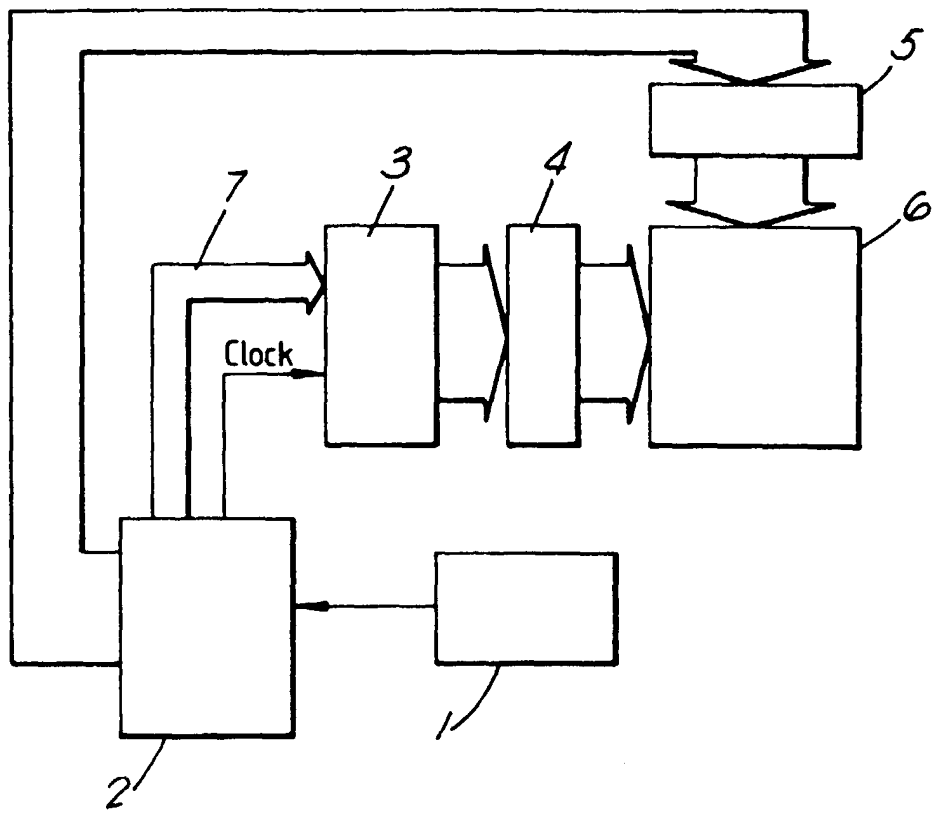


Fig. 2.

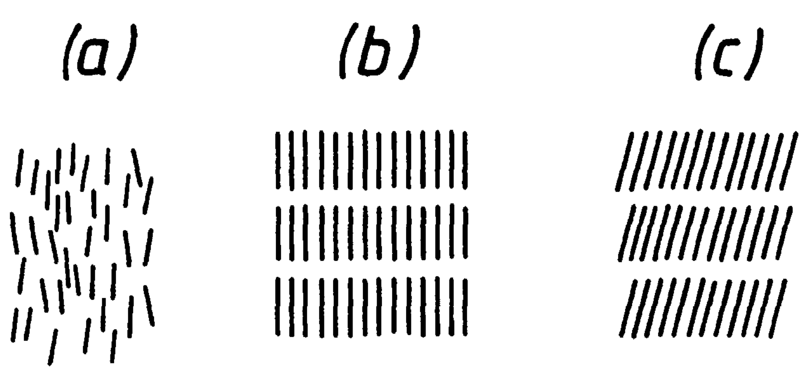

Fig .3.

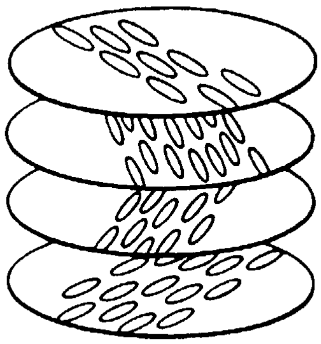

Fig.4(a).

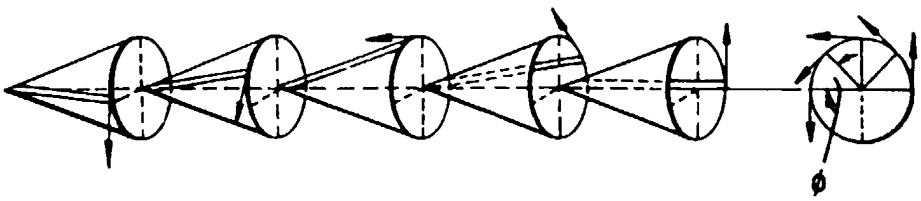


Fig .4(b).

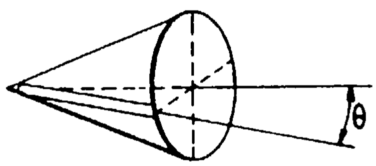

Fig. 5.

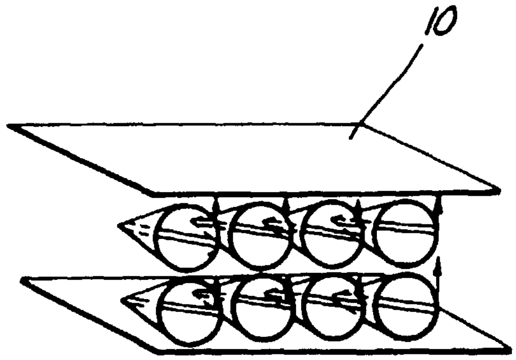


Fig. 6(a).

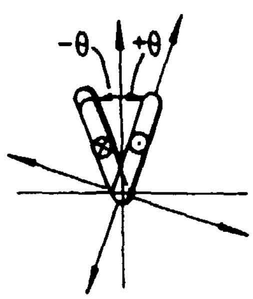


Fig. 6(b).

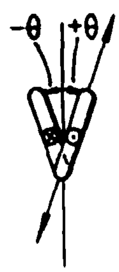

Fig. 7.

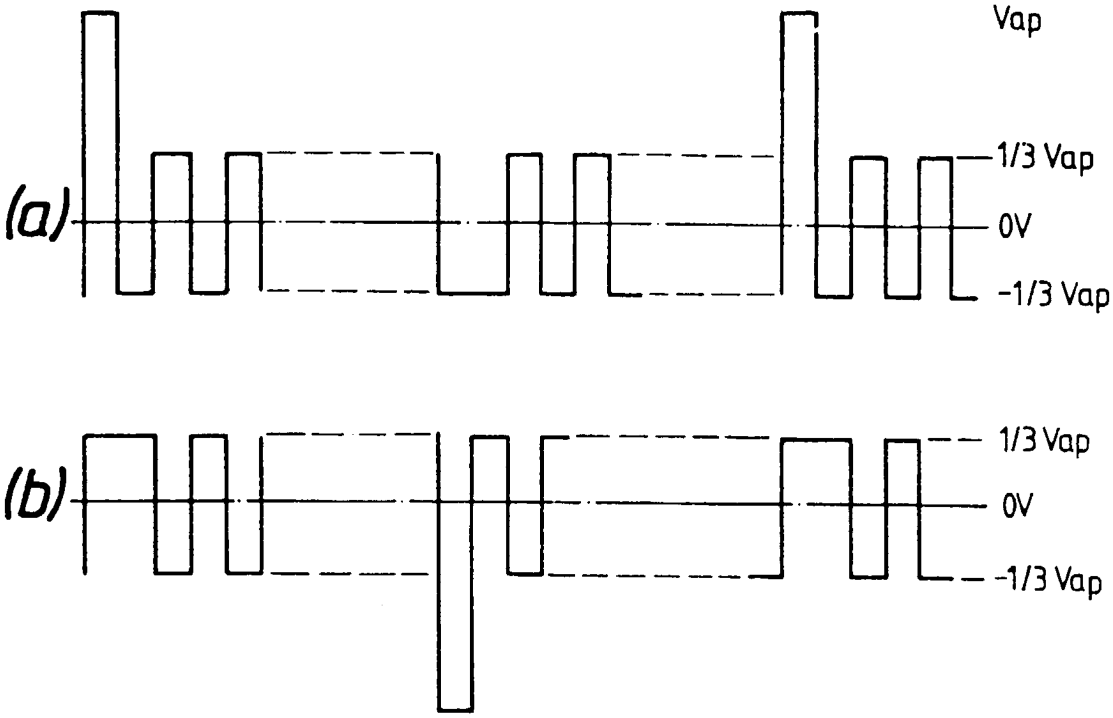
(a)
Vap
1/3 Vap
0V
-1/3 Vap
(b)
1/3 Vap
0V
-1/3 Vap

Fig. 8.

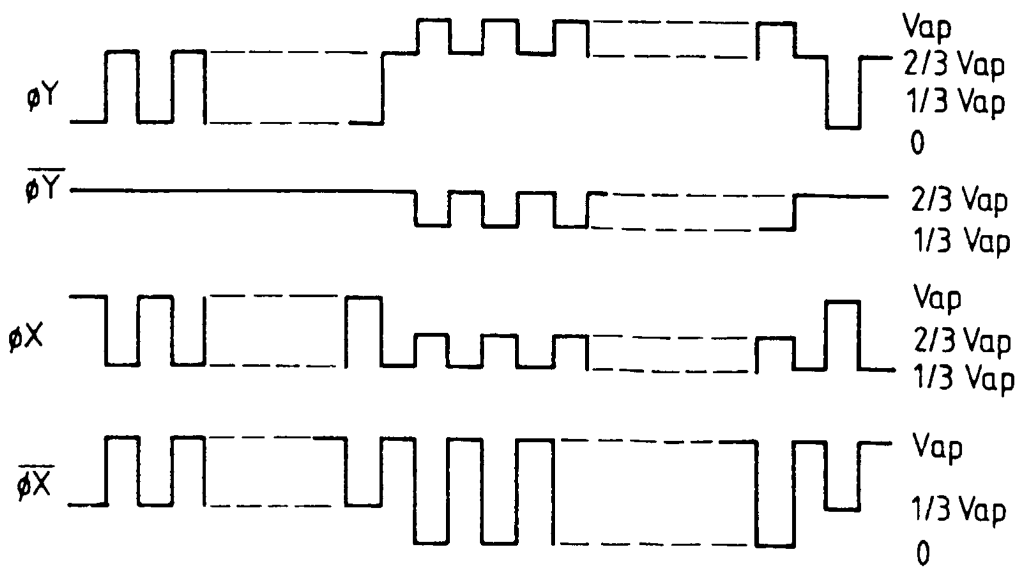
φY
Vap
2/3 Vap
1/3 Vap
0
$\overline{φY}$
2/3 Vap
1/3 Vap
φX
Vap
2/3 Vap
1/3 Vap
$\overline{φX}$
Vap
1/3 Vap
0

Fig. 9.

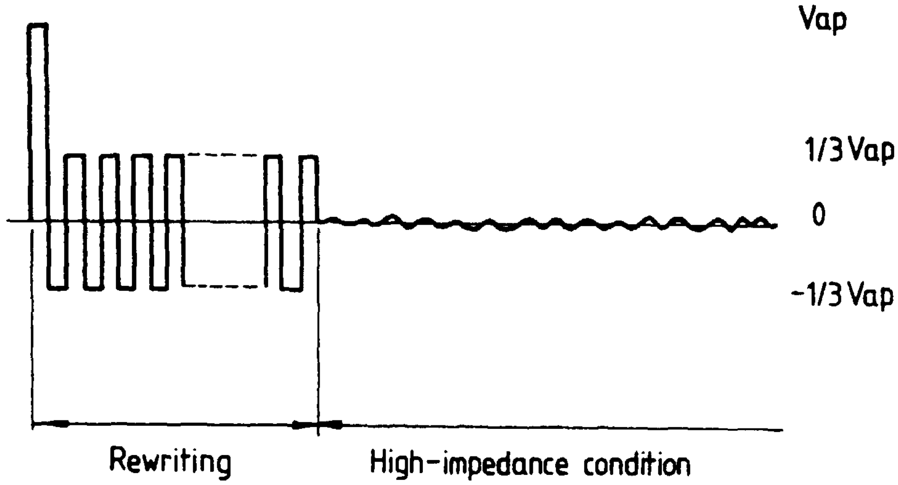


Fig. 10.

(a)

(b)

(c)

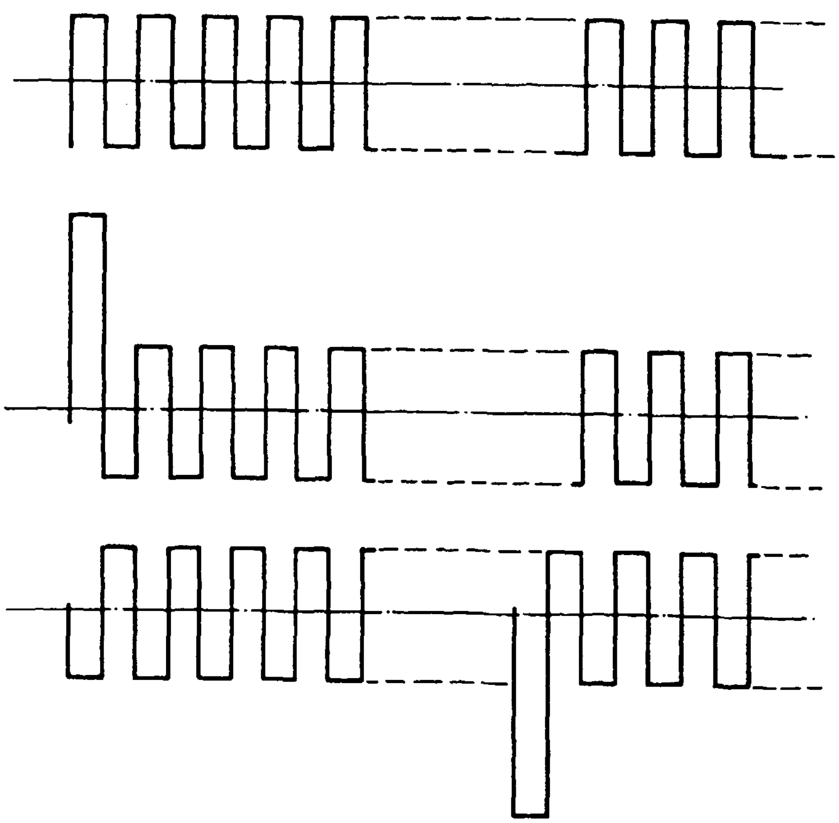

Fig.11.